# EUROPEAN PATENT APPLICATION

(11) **EP 0 947 996 A1**
(43) Date of publication of application: **06.10.1999**
(21) Application number: 98107764.7
(22) Date of filing: 25.04.1998
(51) Int. Cl.: G21C 9/016, G21D 1/00

(54) **Catching storage for molten core**

(30) Priority: 31.03.1998 DE 19814308
(71) Applicant: Siempelkamp Guss- und Anlagentechnik Holding GmbH & Co., 47803 Krefeld (DE)
(72) Inventor: Sappok, Manfred, Dr., 47918 Tönisvorst (DE); Bach, F.W., Prof. Dr.-Ing., 30916 Isernhagen (DE)
(74) Representative: Honke, Manfred, Dr.-Ing.

(57) **Zusammenfassung**

Es handelt sich um ein Auffanglager (1) zum Zwischenlagern von aus einem Reaktordruckbehälter (2) ausgelaufener Kernschmelze (3), wobei der Lagerboden (4) Auffangfelder (5) für die Kernschmelze bildende Bodenvertiefungen aufweist. Ferner sind zwischen den Bodenvertiefungen (6) von der Kernschmelze überlaufene Trennstege (7) vorgesehen. In diesen Bereichen lassen sich nach dem Erstarren der Kernschmelze und hinreichender Abkühlung Trennschnitte durchführen, so daß die daraus entstandenen Kernschmelzstücke ausgehoben, verpackt und entsorgt werden können.

## Description

Die Erfindung betrifft ein Auffanglager zum Zwischenlagern von aus einem Reaktordruckbehälter ausgelaufener Kernschmelze.

Nach den gesetzlichen Regelungen müssen auch schwere Störfälle bei Kernreaktoren ohne gravierende Auswirkung auf die Umwelt beherrscht werden. Das bedeutet, daß in einem Kernkraftwerk auch der Störfall "Kernschmelzen" ohne Beeinträchtigung der Umwelt ablaufen muß. Zu diesem Zweck kennt man als sog. "Core Catcher" Auffanglager, in welche die Kernschmelze, nachdem ein Reaktordruckbehälter durchschmolzen wurde, aufgefangen wird und abkühlen muß bzw. abgekühlt wird (vgl. PCT-WO 96/31 884 und US 5,703,917). Bei den bekannten Auffanglagern ist bisher nicht berücksichtigt worden, daß sie nach einer entsprechenden Abkühlzeit entsorgt werden müssen. - Hier setzt die Erfindung ein.

Der Erfindung liegt das technische Problem zugrunde, ein Auffanglager der eingangs beschriebenen Ausführungsform zu schaffen, welches eine einwandfreie Entsorgung der erstarrten Kernschmelze nach einer hinreichenden Abkühlzeit in einfacher und funktionsgerechter Weise ermöglicht.

Zur Lösung dieser Aufgabe ist das gattungsgemäße Auffanglager durch einen Lagerboden mit Auffangfelder für die Kernschmelze bildenden Bodenvertiefungen gekennzeichnet. Dabei sind erfindungsgemäß zwischen den Bodenvertiefungen von der Kernschmelze überlaufene Trennstege vorgesehen. - Nach Lehre der Erfindung wird ein strukturierter Lagerboden mit speziellen Konturen verwirklicht, der es ermöglicht, mit relativ geringen Trennmaßnahmen die ausgelaufene und erstarrte Kernschmelze nach einer Abkühlzeit von ca. 20 bis 40 Jahren in Stücke zu zerlegen. Diese Stücke lassen sich dann unschwer verpacken und für die Entsorgung über ein Endlager bereitstellen. Insoweit findet gleichsam eine Portionierung der erstarrten Kernschmelze statt. Das Zerlegen der Kernschmelze und folglich deren Portionierung erfolgt zweckmäßigerweise nach Maßgabe der Auffangfelder, weil zwischen den Auffangfeldern bzw. Bodenvertiefungen und daher im Bereich der Trennstege jeweils Verbindungsstege in der erstarrten Kernschmelze mit verhältnismäßig geringer Schichtdicke und folglich Dünnschichtbereiche entstehen, die sich unschwer durchtrennen lassen, beispielsweise mittels spezieller Schneidetechniken wie z. B. Laserschneiden, Diamantsägen, Plasmabrennen oder dgl. Die anschließend vorhandenen dickeren Stücke der Kernschmelze lassen sich dann mit speziellen Greifwerkzeugen aufnehmen und in eine bereitgestellte Verpackung einsetzen. In diesem Zusammenhang sieht die Erfindung vor, daß an der Decke des Auffanglagers Trenn- und Greifwerkzeuge angebracht sind, die es in Kenntnis der vorhandenen Geometrie der Auffangfelder ermöglichen, an jeder der dünnschichtigen Kernschmelzpartien die erforderlichen Trennschnitte durchzuführen und die daraus resultierenden Kernschmelzstücke bzw. -segmente auszuheben.

Im Rahmen der Erfindung besteht allerdings auch die Möglichkeit, die Bodenvertiefungen und Trennstege so auszubilden und anzuordnen, daß sich beim Abkühlen der Kernschmelze eine Kontraktion ergibt, welche zu einer Rißbildung in den Bereichen der Trennstege führt. Dadurch wird das Entfernen der Kernschmelzstücke bzw. -segmente in den Bodenvertiefungen erheblich erleichtert. Da sich das Volumen der Kernschmelze ebenso unschwer wie das Volumen der Bodenvertiefungen ermitteln läßt, besteht im Rahmen der Erfindung sogar die Möglichkeit, die geometrische Anordnung der Bodenvertiefungen und Trennstege so einzurichten, daß die Trennstege - nachdem die Bodenvertiefungen die ausgeflossene Kernschmelze aufgenommen haben - infolge der Kontraktion der Kernschmelze schließlich gar nicht mehr überdeckt sind, so daß in den Bodenvertiefungen Einzelsegmente entstehen, die ohne zusätzliche Trennmaßnahmen den Bodenvertiefungen entnommen werden können. Das Ausheben der Kernschmelzstücke bzw. -segmente wird im übrigen dadurch erheblich erleichtert, daß die Bodenvertiefungen einen sich konisch verjüngenden Querschnitt aufweisen, oder beispielsweise einen nach unten pyramidenförmigen oder auch schalenförmigen Querschnitt besitzen. Der Umfang der Bodenvertiefungen ist vorzugsweise mehreckig oder kreisförmig ausgebildet. Jedenfalls läßt sich stets eine geordnete Entsorgung der erstarrten Kernschmelze nach hinreichender Abkühlzeit in einfacher und funktionsgerechter Weise verwirklichen,

Weitere erfindungswesentliche Merkmale sind im folgenden aufgeführt. So sieht die Erfindung vor, daß die Oberkante der Trennstege zwischen den Auffangfeldern bzw. Bodenvertiefungen unterhalb des Bodenniveaus im Einlaufbereich der Kernschmelze liegt, und zwar um ein die Schichtdicke der Verbindungsstege vorgebendes Maß, weil diese Trennstege von der Kernschmelze überflossen werden. Es besteht aber auch die Möglichkeit, daß die Oberkante der Trennstege oberhalb des Bodenniveaus im Einlaufbereich der Kernschmelze liegt, wenn dieses Bodenniveau beispielsweise mit dem Grund der Bodenvertiefungen fluchtet. Da das Auffanglager einen Einlauf für die Kernschmelze aufweist, liegt im ersteren Fall die Einlaufsohle im Übergangsbereich zum Lagerboden höher als die Oberkante der Trennstege, so daß gleichsam ein erhabener Einlauf verwirklicht wird. Im letzteren Fall dagegen liegt die Einlaufsohle im Übergangsbereich zum Lagerboden niedriger als die Oberkante der Trennstege, so daß gleichsam ein versenkter Einlauf verwirklicht wird. Der Lagerboden ist vorzugsweise als Kassettenboden ausgebildet, so daß also praktisch die gesamte Bodenfläche durch Bodenvertiefungen zur Aufnahme von Kernschmelze unterteilt ist. So läßt sich beispielsweise das Core eines EPR (European pressurized water reactor) nach einem Kernschmelzunfall mit ca. 300 qm entsorgen. In diesem Zusammenhang ist die Verwirklichung von ca. 100 portionierenden Bodenvertiefungen möglich, so daß im Zuge des Trennvorganges Kernschmelzstücke bzw. -segmente in der Größenordnung von ca. 3 t entstehen.

Im folgenden wird die Erfindung anhand einer lediglich ein Ausführungsbeispiel darstellenden Zeichnung näher erläutert. Es zeigen:
- Fig. 1: teilweise ein erfindungsgemäßes Auffanglager im Vertikalschnitt mit angedeutetem Reaktorbehälter,

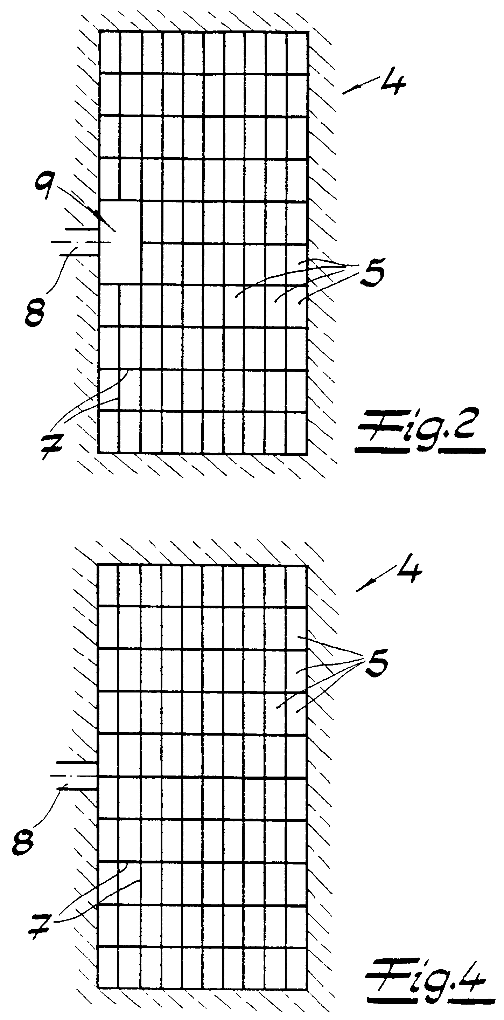

- Fig. 2: eine Draufsicht auf den Lagerboden für den Gegenstand nach Fig. 1,
- Fig. 3: ausschnittsweise eine abgewandelte Ausführungsform des Gegenstandes nach Fig. 1 und
- Fig. 4: eine Draufsicht auf den Lagerboden für den Gegenstand nach Fig. 3.

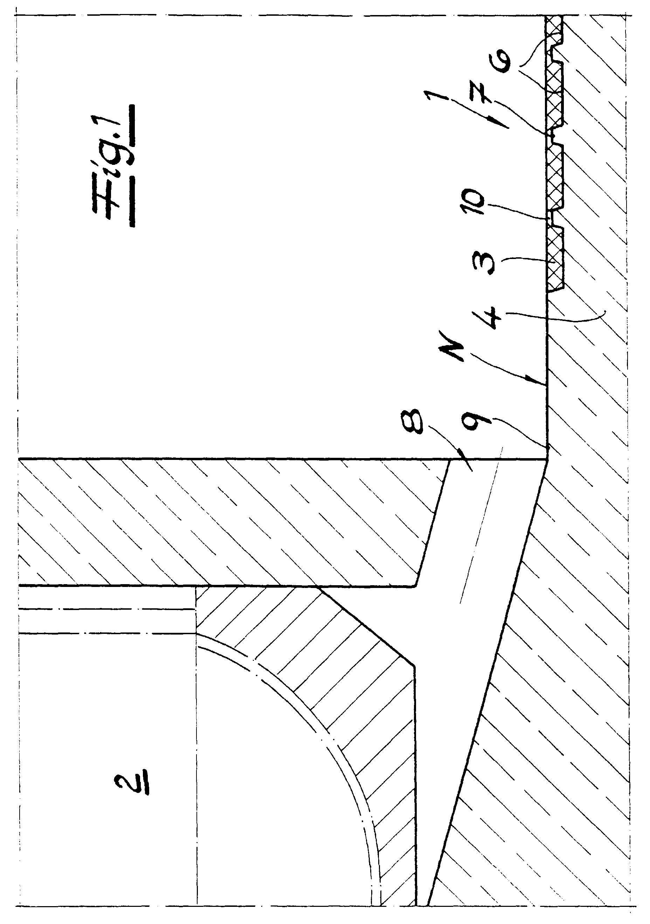

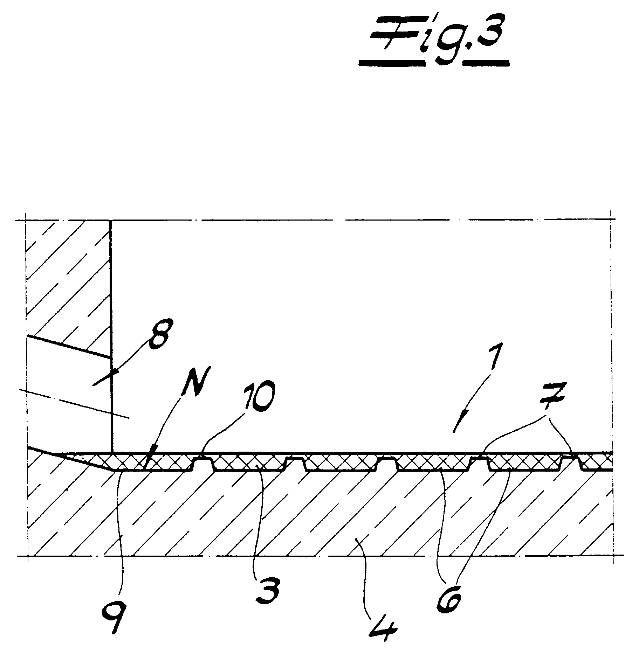

In den Figuren ist ein Auffanglager 1 zum Zwischenlagern von aus einem Reaktordruckbehälter 2 ausgelaufener Kernschmelze 3 dargestellt. Dieses Auffanglager 1 weist einen Lagerboden 4 auf, der Auffangfelder 5 für die Kernschmelze 3 bildende Bodenvertiefungen 6 besitzt. Zwischen den Bodenvertiefungen 6 sind von der Kernschmelze 3 überlaufene Trennstege 7 vorgesehen. Bei der Ausführungsform nach Fig. 1 befindet sich die Oberkante der Trennstege 7 unterhalb des Bodenniveaus N im Einlaufbereich der Kernschmelze. Bei der Ausführungsform nach Fig. 3 liegt die Oberkante der Trennstege 7 oberhalb des Bodenniveaus N im Einlaufbereich der Kernschmelze, wobei das Bodenniveau N praktisch mit dem Grund der Bodenvertiefungen 6 fluchtet. In beiden Fällen ist der Lagerboden 4 als Kassettenboden ausgebildet.

Das Auffanglager 1 weist einen Einlauf 8 für die Kernschmelze 3 auf, die im Störfall von dem durchgeschmolzenen Reaktordruckbehälter 2 kommt. Bei der Ausführungsform nach Fig. 1 liegt die Einlaufsohle 9 im Übergangsbereich zum Lagerboden 4 höher als die Oberkante der Trennstege 7, so daß ein erhabener Einlauf verwirklicht ist. Bei der Ausführungsform nach Fig. 3 liegt dagegen die Einlaufsohle 9 im Übergangsbereich zum Lagerboden 4 niedriger als die Oberkante der Trennstege 7, so daß ein versenkter Einlauf verwirklicht wird. Oberhalb der Trennstege 7 bilden sich Dünnschichtbereiche 10, die ein Zerlegen der erstarrten Kernschmelze ermöglichen.

Nach dem Ausführungsbeispiel weisen die Bodenvertiefungen 6 einen sich nach unten konisch verjüngenden Querschnitt auf.

## Patentansprüche

1. Auffanglager zum Zwischenlagern von aus einem Reaktordruckbehälter ausgelaufener Kernschmelze, **gekennzeichnet durch** einen Lagerboden (4) mit Auffangfelder (5) für die Kernschmelze (3) bildenden Bodenvertiefungen (6).

2. Auffanglager nach Anspruch 1, dadurch gekennzeichnet, daß zwischen den Bodenvertiefungen (6) von der Kernschmelze (3) überlaufene Trennstege (7) vorgesehen sind.

3. Auffanglager nach Anspruch 1 oder 2, dadurch gekennzeichnet, daß die Oberkante der Trennstege (7) unterhalb des Bodenniveaus (N) im Einlaufbereich der Kernschmelze (3) liegt.

4. Auffanglager nach Anspruch 1 oder 2, dadurch gekennzeichnet, daß die Oberkante der Trennstege (7) oberhalb des Bodenniveaus (N) im Einlaufbereich der Kernschmelze (3) liegt.

5. Auffanglager nach einem der Ansprüche 1 bis 4, dadurch gekennzeichnet, daß der Lagerboden (4) als Kassettenboden ausgebildet ist.

6. Auffanglager mit einem Einlauf für die Kernschmelze, dadurch gekennzeichnet, daß die Einlaufsohle (9) im Übergangsbereich zum Lagerboden (4) höher als die Oberkante der Trennstege (7) liegt.

7. Auffanglager nach einem der Ansprüche 1 bis 5, dadurch gekennzeichnet, daß die Einlaufsohle (9) im Übergangsbereich zum Lagerboden (4) niedriger als die Oberkante der Trennstege (7) liegt.

8. Auffanglager nach einem der Ansprüche 1 bis 7, dadurch gekennzeichnet, daß an der Lagerdecke verfahrbare Trenn- und Greifwerkzeuge zum Zerlegen der erstarrten Kernschmelze (3) in den Dünnschichtbereichen (10) oberhalb der Trennstege (7) und zum Ausheben der Kernschmelzstücke angeordnet sind.

9. Auffanglager nach einem der Ansprüche 1 bis 8, dadurch gekennzeichnet, daß die Bodenvertiefungen (6) einen sich konisch verjüngenden Querschnitt oder einen nach unten pyramidenförmigen Querschnitt oder einen schalenförmigen Querschnitt aufweisen.

10. Auffanglager nach einem der Ansprüche 1 bis 9, dadurch gekennzeichnet, daß die Bodenvertiefungen (6) einen mehreckigen oder kreisförmigen Umfang aufweisen.
